Europäisches Patentamt

European Patent Office

Office européen des brevets

(11) Veröffentlichungsnummer: **0 270 776 B1**

# EUROPÄISCHE PATENTSCHRIFT

(45) Veröffentlichungstag der Patentschrift: **04.09.91**

(51) Int. Cl.5: **C08J 7/12, B29C 49/46**

(21) Anmeldenummer: **87115135.3**

(22) Anmeldetag: **16.10.87**

(54) Verfahren zur Herstellung fluorierter Oberflächen von Polymeren.

(30) Priorität: **01.12.86 DE 3640975**

(43) Veröffentlichungstag der Anmeldung:
**15.06.88 Patentblatt 88/24**

(45) Bekanntmachung des Hinweises auf die
Patenterteilung:
**04.09.91 Patentblatt 91/36**

(84) Benannte Vertragsstaaten:
**AT ES FR GB IT SE**

(56) Entgegenhaltungen:
DE-B- 2 644 508
DE-C- 2 401 948
DE-C- 3 523 137

PLASTICS ENGINEERING, Band 42, Nr. 4,
April 1986, Brookfield Center, CT, US; D.M.
BUCK et al.: "Treated HDPE containers resist
solvent permeation"

(73) Patentinhaber: **MESSER GRIESHEIM GMBH**
**Hanauer Landstrasse 330**
**W-6000 Frankfurt/Main(DE)**

(72) Erfinder: **Eschwey, Manfred, Dr.**
**Kreuzbergstr. 7H**
**W-4000 Düsseldorf 31(DE)**
Erfinder: **van Bonn, Rolf**
**Salzachstr. 5**
**W-4100 Duisburg 29(DE)**
Erfinder: **Neumann, Horst**
**Andreas Faust-Str. 11**
**W-6233 Kelkheim(DE)**

## Beschreibung

Die Erfindung betrifft ein Verfahren zur Herstellung von Hohlkörpern mit fluorierten Innenflächen aus thermoplastischen Materialien nach dem Oberbegriff des Anspruches 1. Als thermoplastische Materialien kommen neben HDPE auch IDPE, PP, EPDM, PVC und ähnliche Stoffe in Frage.

Im Automobilbau geht man zunehmend dazu über, die Kraftstoffbehälter aus Polymeren, insbesondere Hochdruck-Polyethylen, herzustellen. Diese Kraftstoffbehälter aus Kunststoff sind leichter und billiger als die herkömmlichen aus Stahlblech.

Außerdem können sie ohne Schwierigkeiten kompliziert gestaltet werden, so daß der vorhandene Raum besser ausgenutzt und das Behältervolumen vergrößert werden kann.

Behälter aus Kunststoff sind jedoch für Lösungsmittel, Treibstoffe und leicht flüchtige oder gasförmige Stoffe nicht völlig dicht, da ständig geringe Mengen durch Permeation nacht außen entweichen. In jüngerer Zeit wird verlangt, die Permeationsrate erheblich zu verkleinern. Dies kann mit gutem Erfolg erreicht werden, indem die innere Oberfläche der Behälter einige Zeit der Einwirkung eines fluorhaltigen Behandlungsgases ausgesetzt wird. Die Oberfläche wird hierbei durch elementares Fluor oder auch in Form von Fluorkohlenstoff- und Fluorkohlenwasserstoffverbindungen belegt. Geeignete Reaktionsmittel sind auch Chlorfluorid, Chlortrifluorid, Bromtrifluorid, Fluorsulfonsäure und ähnliche Stoffe. Die fluorhaltige Schicht setzt die Permeationsrate erheblich herab. Wenn man das fluorhaltige Behandlungsgas zugleich als Blasmedium bei der Blasextrudation von Behältern verwendet, spricht man von der sogenannten In-line-Fluorierung. Führt man dagegen die Fluorierung an fertig extrudierten Behältern durch, spricht man von der Off-line-Fluorierung. Derartige Verfahren sind beispielsweise bekannt aus den DE-PS 24 01 948 und DE-PS 26 44 508. Neben dem In-line-Einstufenverfahren gemäß DE-PS 24 01 948 ist durch die DE-PS 35 23 137 auch ein In-line Zweistufenverfahren bekannt.

Die Fluorierung der Oberflächen von Kunststofen beeinflußt jedoch nicht nur im hohen Maße das Permeationsverhalten, sondern es wird auch die Abriebfestigkeit, die chemische, thermische und mechanische Beständigkeit, das Klebeverhalten und die Benetzbarkeit beeinflußt. Aus diesem Grunde ist die Erfindung nicht auf die Fluorierung der inneren Oberfläche von Kunststoff-Kraftstoffbehältern beschränkt. Bei der Fluorierung wird die Polymeroberfläche einem Angriff von elementarem Fluor ausgesetzt. Im einfachsten Fall, z.B. bei Polyethylen, kommt es dabei zu einer stufenweise radikalischen Substitution der CH-Bindungen durch CF-Bindungen.

Wie umfangreiche eigene Untersuchungen ergeben haben, resultieren je nach den Reaktionsbedingungen stark unterschiedlich strukturierte fluorierte Schichten. Zur Erzielung bestimmter günstiger und eindeutig reproduzierbarer Oberflächeneffekte für das obengenannte Materialverhalten ist die genaue Einhaltung bestimmter Stukturparemeter einer solchen fluorierten Oberfläche von erheblicher Bedeutung. Hierbei handelt es sich in erster Linie um Schichtdicke, Gleichmäßigkeit der Fluorbelegung, Verteilung von $CH_2$-, CHF und $CF_2$-Gruppen und das Tiefenprofil.

Aufgabe der Erfindung ist daher eine Verbesserung der Sperrschichteigenschaften von fluorierten Grenzschichten für Lösungsmittel, Triebstoffe, leichtflüchtige oder gasförmige Stoffe.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

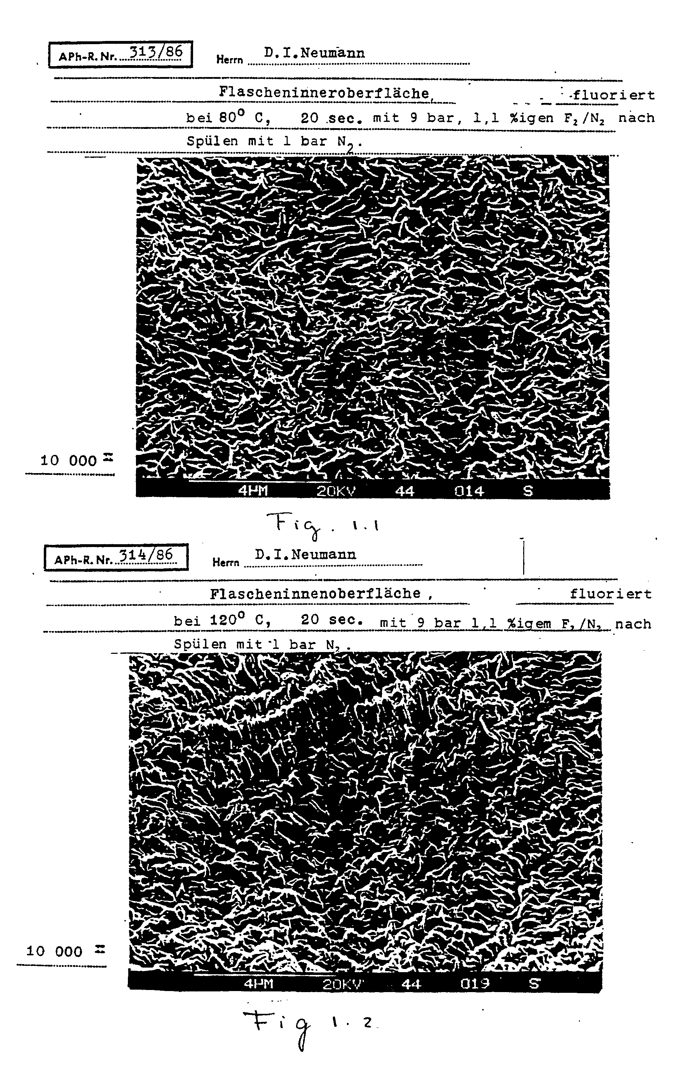

Die Fig. 1.1 bis 2.2 zeigen REM-Aufnahmen fluorierter HDPE-Oberflächen bei verschiedenen Temperaturen.

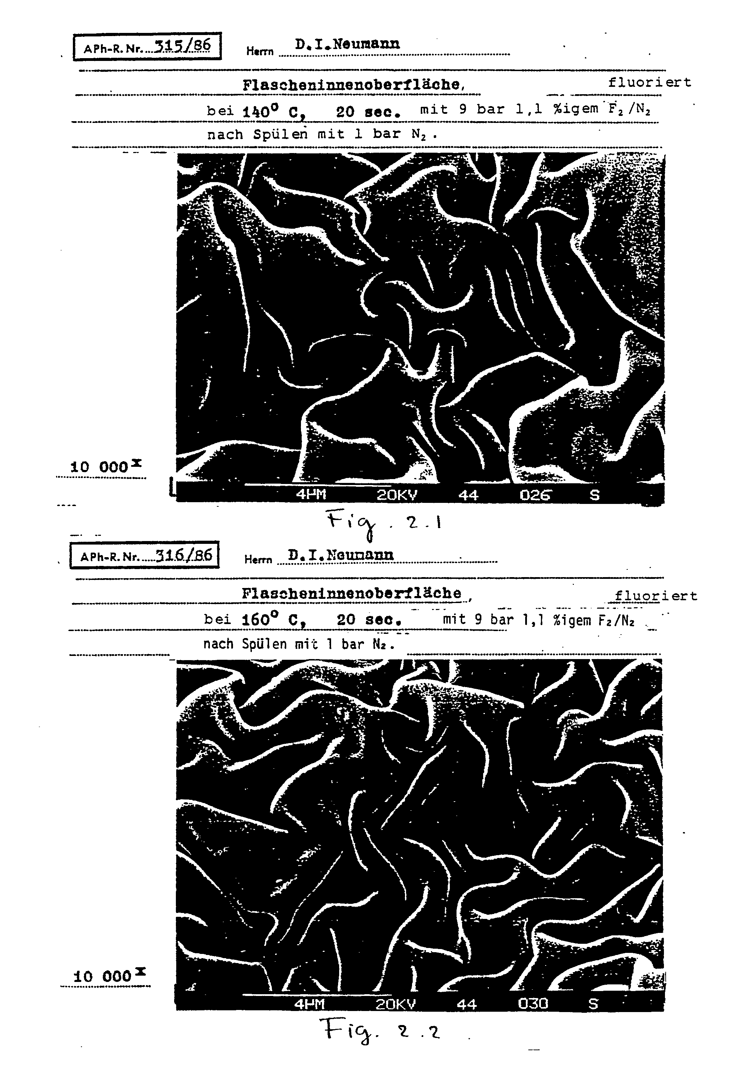

Untersuchungen mit dem Rasterelektronenmikroskop haben ergeben, daß in Abhängigkeit von der Oberflächentemperatur der untersuchten Hohlkörper eine Veränderung der Oberflächenstuktur erfolgt. Als Beispiel wird auf die Fig. 1.2 und 2.1 verwiesen, die REM-Aufnahmen mit 10 000 facher Vergrößerung einer HDPE-Oberfläche bei 120 °C und bei 140 °C zeigen.

Dabei wurde gefunden, daß die starke Runzelbildung (Fig. 2.1) bei Temperaturen der thermoplastischen Materialien beginnt, die in der Nähe des Schmelzpunktes oder darüber liegen. Durch die runzlige Form wird die spezifische Oberfläche stark vergrößert. Versuche haben ergeben, daß trotz Erhöhung des Fluorgehaltes der Oberfläche auf 50 - 60 $\mu g/cm^2$ die Permeation entsprechend der Vergrößerung der Fläche zunimmt.

Demgegenüber hat sich gezeigt, daß bei einer Fluorierung unterhalb der Schmelztemperatur die spezifische Oberfläche sich nicht vergrößert. Dadurch bleibt die normale Kristallinität des thermoplastischen Materials auf der Oberfläche weitgehend unverändert. Die Oxidation des Kunststoffes beschränkt sich fast vollständig auf die Substitution der H-Atome durch Fluor. Weitere Abbaureaktionen des Polymers beim Angriff oxidierender Medien werden durch die erfindungsgemäßen Prozeßtemperaturen verhindert. Die fluorierung in dem erfindungsgemäßen Temperaturbereich von 50 bis 130 °C, vorzugsweise 80 - 120 °C, hat ferner den Vorteil, daß bei diesen Temperaturen eine nahezu gleichmäßige Temperaturverteilung auf der Innenfläche des Hohlkörpers besteht, die eine gleichförmige, reproduzierbare Grenzschichtherstellung ermöglicht.

Ein weitere Vorteil der Erfindung besteht darin, daß in dem erfindungsgemäßen Temperaturbereich die günstigen morphologischen Strukturmerkmale der Polymeroberfläche weitgehend erhalten bleiben. Polyethylen kristallisiert beim Abkühlen der Schmelze. Die langen Molekülketten ordnen sich dabei (gefaltet) in sehr kleinen Kristalliten. Niederdruckpolyethylen, auch Polyethylen hart oder Polyethylen hoher Dichte genannt, erreicht einen Kristallinitätsgrad von 60 - 80 %. Mit zunehmender Kristallinität steigen an: Streckspannung, Elastizitätsmodul, Steifigkeit, Beständigkeit gegen Lösungsmittel und Undurchlässigkeit für Gase und Dämpfe.

Die güngstigen Eigenschaftsmerkmale einer ungestört erstarrten (rekristallisierten) Polymeroberfläche bleiben weitgehend erhalten, da die Fluorierungsreaktion erst nach Ausbildung der Kristallite einsetzt. Deutlich erkennbar sind diese Unterschiede in den Fig. 1.1 bis 2.2. Kristallite und deren Vernetzungen sind deutlich zu erkennen. Die Oberfläche gemäß Fig. 2.1 und 2.2 entspricht weitestgehend der üblichen Oberflächenstruktur eines mit einem Inertgas blasextrudierten Behälters. Wird die Fluorierung bei höheren Oberflächentemperaturen durchgeführt, also oberhalb der Kristallitschmelztemperatur des verwendeten Materials, entstehen nach dem Erkalten der Polymerschmelze stark gefaltete, amorphe Strukturen mit einer stark vergrößerten spezifischen Oberfläche.

Beispiel:

Ein HDPE-Blastyp mit MF/190/5 = 0,24 g/min, Dichte 0.944-0.948 g/cm$^3$, wird auf einer Blasmaschine zu Kunststoff-Kraftstoffbehältern (KKB) verarbeitet. Temperatur des Vorformlings 220°C, Blasmedium N$_2$, 10 bar. Der fertig geblasene, formstabile Behälter mit einer Wanddicke von durchschnittlich 4 mm wird dann durch Intervallspülen mit N$_2$ auf einer Temperatur von 110°C abgekühlt. Im Anschluß daran strömt ein 1.1 %iges F$_2$/N$_2$-Gemisch in das Innere des Behälters bis der Druck auf 10 bar angestiegen ist. Nach 40 sec. Einwirkungszeit wird das Inertgas/Reaktionsgasgemisch der Entsorgung zugeführt.

Ein so hergestellter 60 1 KKB hat eine Fluorbelegung von im Mittel 25 µg/cm$^2$ und eine Permeation von 1,5/24 h. Die fluorierte Innenfläche des KKB seiht matt aus.

Die Erfindung ist nicht auf die angegebenen Prozeßparameter beschränkt. Die Fluorisierungstemperaturen hängen von dem Material des Hohlkörpers ab. Ebenso ist der Anteil des Reaktionsgases in Bereichen zwischen 0,5 und 10 % variierbar. Die Einwirkungszeit des Reaktionsgases kann zwischen 10 und 60 Sekunden betragen. neben N$_2$ können auch andere Inertgase Verwendung finden.

Vor dem Einblasen des Kühlmittels erfolgt vorzugsweise eine Absenkung des Hohlkörperinnendruckes auf 1 bis 5 bar. Das gleiche kann vor dem Einführen des Reaktionsgasmisches erfolgen.

Wie Untersuchungen ergeben haben, wird durch die Erfindung eine verbesserte Langzeitstabilität der Sperrschicht erreicht. Ferner wird das Permeationsverhalten gegenüber polaren Kraftstoffzusätzen deutlich vermindert. Durch das erfindungsgemäße Verfahren wird außerdem eine sparsame Verwendung von Fluor und entsprechenden Reaktionsmitteln erreicht.

Eine besonders bevorzugte und vorteilhafte Ausführungsform der Erfindung ist die Herstellung von Kunststoff-Kraftstoffbehältern aus HDPE.

## Patentansprüche

1.  Verfahren zum Blasformen und Fluorieren eines Hohlkörpers aus thermoplastischem Material, bei dem ein Vorformling durch Einblasen eines inerten Blasgases zur Anlage an die Innenwandung der Blasform gebracht wird und in dieser Lage danach ein Inertgas/Reaktionsgemisch in den Hohlkörper eingeleitet wird zur Fluorisierung der Hohlkörperinnenfläche,
    dadurch gekennzeichnet, daß
    das Einblasen des Inertgas/Reaktionsgasgemisches nach Abkühlung der Hohlkörperinnenfläche von der Formungstemperatur auf eine Temperatur unterhalb des Schmelzpunktes des thermoplastischen Materials, bei der die Ausbildung der Kristallite beendet ist, erfolgt.

2.  Verfahren anch Anspruch 1,
    dadurch gekennzeichnet, daß
    die Temperatur der Hohlkörperinnenfläche beim Einblasen des Inertgas/Reaktionsgasgemisches 50 - 130°C, vorzugsweise 80 - 120°C beträgt.

3.  Verfahren nach Anspruch 1 oder 2,
    dadurch gekennzeichnet, daß
    vor dem Einblasen des Inertgas/Reaktionsgasgemisches zur Kühlung des Hohlkörpers dem Blasgas ein Inertgas aufdrückt wird.

4.  Verfahren nach einem der Ansprüche 1 bis 3,
    dadurch gekennzeichnet, daß
    vor Einblasen des Kühlgases eine Absenkung des Hohlkörperinnendruckes erfolgt.

5. Verfahren nach einem der Ansprüche 1 bis 4, dadurch gekennzeichnet, daß vor Einblasen des Inertgas/Reaktionsgasgemisches eine Absenkung des Hohlkörperinnendruckes erfolgt.

## Claims

1. Process for blow-moulding and fluorinating a hollow article made from thermoplastic material, in which a preform is pressed against the inner wall of the blow mould by blowing in an inert blowing gas, and, in this position, an inert gas/reaction gas mixture is introduced into the hollow article in order to fluorinate the inner surface of the hollow article, characterised in that the inert gas/reaction gas mixture is blown in after the inner surface of the hollow article has been cooled from the moulding temperature to a temperature below the melting point of the thermoplastic material, at which the formation of crystallites is complete.

2. Process according to Claim 1, characterised in that the temperature of the inner surface of the hollow article during blowing-in of the inert gas/reaction gas mixture is 50 - 130° C, preferably 80 - 120° C.

3. Process according to Claim 1 or 2, characterised in that an inert gas is injected into the blowing gas in order to cool the hollow article before the inert gas/reaction gas mixture is blown in.

4. Process according to one of Claims 1 to 3, characterised in that the pressure inside the hollow article is reduced before the cooling gas is blown in.

5. Process according to one of Claims 1 to 4, characterised in that the pressure inside the hollow article is reduced before the inert gas/reaction gas mixture is blown in.

## Revendications

1. Procédé pour le formage-soufflage et la fluoration d'un corps creux en matière thermoplastique, dans lequel on forme une ébauche par insufflation d'un gaz de soufflage inerte dans l'unité, sur la paroi interne du moule de soufflage et en cette position, on introduit ensuite un mélange de gaz de réaction/gaz inerte dans le corps creux pour la fluoration de la surface interne du corps creux, caractérisé en ce que l'insufflation du mélange de gaz de réaction/gaz inerte est effectuée après refroidissement de la surface interne du corps creux, de la température de formage à une température inférieure au point de fusion du matériau thermoplastique, à laquelle est terminée la formation des cristallites.

2. Procédé selon la revendication 1, caractérisé en ce que lors de l'insufflation du mélange de gaz de réaction/gaz inerte, la température de la face interne du corps creux est de 50 à 130° C, de préférence de 80 à 120° C.

3. Procédé selon la revendication 1 ou 2, caractérisé en ce que, avant l'insufflation du mélange de gaz de réaction/gaz inerte, pour le refroidissement du corps creux, un gaz inerte est injecté dans le gaz de soufflage.

4. Procédé selon l'une quelconque des revendications 1 à 3, caractérisé en ce que l'on effectue une diminution de la pression interne du corps creux avant l'insufflation du gaz de refroidissement.

5. Procédé selon l'une quelconque des revendications 1 à 4, caractérisé en ce que l'on effectue une diminution de la pression interne du corps creux avant l'insufflation du mélange de gaz de réaction/gaz inerte.

APh-R. Nr. 313/86    Herrn    D.I.Neumann

Flascheninneroberfläche,                    fluoriert
bei 80° C,    20 sec. mit 9 bar, 1,1 %igen $F_2/N_2$ nach
Spülen mit 1 bar $N_2$.

10 000 ≈

Fig. 1.1

APh-R. Nr. 314/86    Herrn    D.I.Neumann

Flascheninnenoberfläche ,                    fluoriert
bei 120° C,    20 sec. mit 9 bar 1,1 %igem $F_2/N_2$ nach
Spülen mit 1 bar $N_2$.

10 000 ≈

Fig 1.2

5

APh-R. Nr. 315/86    Herrn   D.I.Neumann

**Flascheninnenoberfläche,**                    fluoriert

bei **140° C,**   **20 sec.**   mit 9 bar 1,1 %igem $F_2/N_2$

nach Spülen mit 1 bar $N_2$.

10 000 $^x$

Fig. 2.1

APh-R. Nr. 316/86    Herrn   D.I.Neumann

**Flascheninnenoberfläche,**                    fluoriert

bei **160° C,**   **20 sec.**   mit 9 bar 1,1 %igem $F_2/N_2$

nach Spülen mit 1 bar $N_2$.

10 000 $^x$

Fig. 2.2